# EUROPEAN PATENT APPLICATION

(11) **EP 2 592 830 A1**
(43) Date of publication of application: **15.05.2013**
(21) Application number: 12191618.3
(22) Date of filing: 07.11.2012
(51) Int. Cl.: H04N 7/18, G07C 9/00, H04M 11/02

(54) **Video door entry system**

(30) Priority: 08.11.2011 IT TV20110153
(71) Applicant: Visionee SRL, 31050 Ponzano Veneto (TV) (IT)
(72) Inventor: Fantin, Mauro, 31050 Ponzano Veneto (TV) (IT)
(74) Representative: Dragotti, Gianfranco

(57) **Abstract**

Video door entry system 5 which comprises an internal unit 10, in turn comprising a video screen 12 and intended to be positioned inside premises, and an external unit 20 intended to be positioned at an access barrier of said premises. The external unit 20 of said video door entry system 5 comprises a camera 22 suitable for acquiring images of the area situated in the proximity of the external unit 20 and for sending them to the video screen 12 of the internal unit 10 for display thereof. Said external unit 20 also comprises a control unit 25 and an operating unit 27 suitable for performing opening of said access barrier following a command of the internal unit 10. The video door entry system 5 is characterized in that said camera 22 is able to recognize and acquire a two-dimensional bar code 32 shown to it. Furthermore, said video door entry system 5 comprises decoding means 26 suitable for decoding said two-dimensional bar code 32 in order to extract the information contained in it and execute operating commands according to said extracted information.

## Description

The present invention relates to a video door entry system.

Video door entry systems composed of at least one internal unit and at least one external unit are known.

The internal unit, which is usually positioned inside an apartment or premises, preferably comprises a monitor for displaying black-and-white or colour images, a telephone-type handset or an integrated microphone/loudspeaker system and a series of pushbuttons for controlling the remote opening of doors or gates or other types of barriers.

In the most recent models, the monitor of the internal unit may be a liquid-crystal screen.

The external unit, which is installed in a position remote from the internal unit, in the vicinity of the barrier which is to be opened, generally comprises a keypad, a microphone, a loudspeaker and a camera able to take black-and-white or colour images. In the most recent models, in order to allow viewing also during night-time hours, the cameras of the external units are preferably equipped with a plurality of infrared ray LEDs. These LEDs ensure, in fact, also in poorly lit external conditions, correct illumination of the area which is to be taken by the camera.

In the known video door entry systems, when a first user presses a call button on the external unit associated with a corresponding internal unit, the camera of the external unit and the monitor of the internal unit called are activated.

The audio system of the video door entry system is activated either when the handset is raised or when the integrated microphone/loudspeaker system of the internal unit called is activated.

In this way the user of the internal unit called may view and talk with the visitor and decide whether to activate the barrier release mechanism, so as to allow the visitor to enter inside the premises.

On some occasions it could be advantageous to have the possibility of controlling functions of the video door entry system from the external unit.

For example, it may be advantageous to be able to perform opening of the barrier directly from the external unit. This may be useful, for example, both in the case where there is nobody in the vicinity of the internal unit and in the case where the person who is to enter and the person waiting inside have already agreed a meeting in advance. It is obvious that, should a user have already agreed in advance to meet another person at the premises provided with a video door entry system, it would be advantageous for the visitor to be able to reach more easily the meeting venue, without having to go through all the operations of calling/waiting/answering/opening of the entrance, as described above. Obviously, it is in any case important to prevent unauthorized access.

For this purpose intercom or video door entry systems have been proposed where the external unit is provided with a keypad via which a previously agreed numerical or alphanumerical opening code may be manually entered. The system, however, for various reasons is not particularly practical or flexible. For example, the code must obviously be reasonably short in length (usually less than about ten characters) and may therefore not contain information other than the simple access code. Moreover, the use or also merely the presence of the keypad may be inconvenient and be subject to faults or vandalism.

The object of the present invention is to provide a video door entry system which is able to receive operating commands from a user via the external unit, in a simple, practical and flexible manner, in particular, but not exclusively, for automated opening of a barrier of premises in the vicinity of which the external unit is installed so as to simplify the access to the premises, preventing at the same time unauthorized entry inside the monitored area.

A further object of the present invention is to provide a video door entry system able to control access inside the area monitored by the system.

In view of these objects, the idea which has occurred according to the invention is that of providing a video door entry system which comprises an internal unit, comprising in turn a video screen and intended to be positioned inside premises, and an external unit intended to be positioned at an access barrier of said premises.

The external unit of said video door entry system comprises a camera which is suitable for acquiring images of the area situated in the proximity of the external unit and sending them to the video screen of the internal unit for display thereof. Said external unit also comprises a control unit and an operating unit suitable for performing opening of this access barrier following a command of the internal unit.

The video door entry system is **characterized in that** the camera is able to recognize and acquire a two-dimensional bar code shown to it. Furthermore, said video door entry system according to the invention comprises decoding means suitable for decoding said two-dimensional bar code in order to extract the information contained in it and execute the operating commands according to said extracted information.

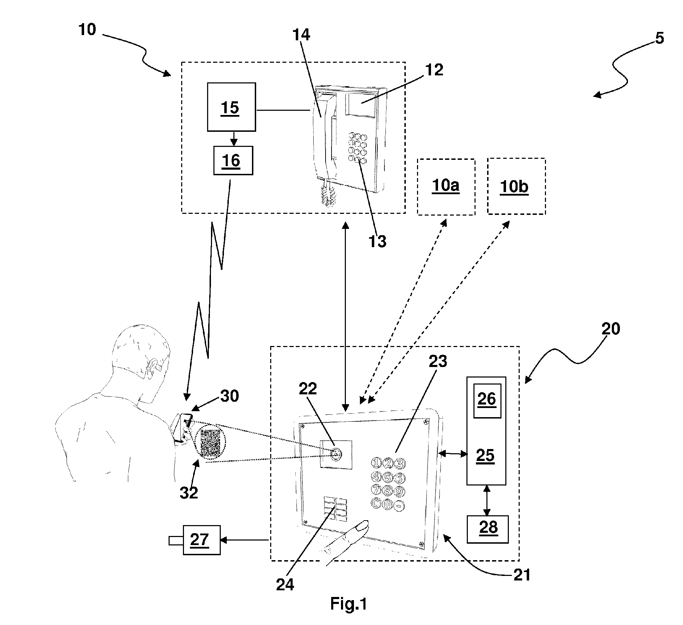

The characteristic features and advantages of the video door entry system provided by applying the principles of the present invention will emerge more clearly from the description below of a number of examples of embodiment provided by way of a non-limiting example with reference to Fig. 1 in which a block diagram of a video door entry system according to the invention is schematically shown:

Figure 1 shows a video door entry system 5 comprising at least one internal unit 10, 10a, 10b and at least one external unit 20.

The internal unit 10, 10a, 10b is intended to be positioned inside premises, while the external unit 20 is intended to be positioned in the vicinity of a barrier (for example a main entrance door with an electric lock) for accessing these premises.

In a known manner, the internal unit 10, 10a, 10b comprises a video screen 12 suitable for displaying the images acquired by a camera 22 of the external unit 20.

Said video screen 12 is able to display images in black-and-white or colour. Advantageously, said video screen 12 may be a liquid crystal screen.

The internal unit 10, 10a, 10b of the video door entry system 5 may further comprise, in a known manner, interface means 13 and audio means 14.

Via the interface means 13 the user is able to perform opening of an access barrier of the premises controlled by the video door entry system 5. The interface means 13 comprise, in fact, a release pushbutton which activates the barrier release mechanism.

As will be explained in greater detail below, by means of the release pushbutton a command for opening the barrier is sent to an operating unit 27 of the external unit 20.

In the case where the video door entry system 5 is provided with internal units 10, 10a, 10b communicating with each other (as may be easily imagined by a person skilled in the art), the user, via the interface means 13 of a first internal unit, may contact a second internal unit. The video door entry system 5 in this case also performs the functions of a known system of intercoms communicating with each other.

The interface means 13 may comprise a keypad (see Figure 1) or a known liquid crystal display of the touch screen type.

Advantageously, the interface means 13 may be suitable for being operated by the user also remotely, i.e. not acting directly via the keypad or the touch screen, using means which may be easily imagined by the person skilled in the art, such as a remote control device.

The internal unit 10, 10a, 10b in accordance with the invention further comprises a control unit 15. The control unit 15 has the function of processing and executing the commands entered by the user via the interface means 13.

The external unit 20 further comprises, in a known manner, interface means 23.

A user approaching the barrier which is controlled by the video door entry system and in the vicinity of which the external unit 20 is positioned, via the interface means 23, may select the internal unit 10, 10a, 10b to be used for requesting entry or with which communication is to be established.

The external unit 20 may comprise, in fact, in a known manner an integrated microphone/loudspeaker device 24. By means of this device 24 the user, who is in the vicinity of the external unit 20, may also establish audio communication with a second user situated in the vicinity of the selected internal unit 10, 10a, 10b.

As already mentioned and in accordance with that shown in Figure 1, the external unit 20 comprises a camera 22 suitable for acquiring images of the area situated in the vicinity of the external unit 20.

In accordance with the invention, the camera 22 is also able to recognize and acquire a two-dimensional bar code 32 shown to it.

The external unit 20 also comprises a control unit 25 and an operating unit 27 which is able to perform opening of the access barrier, in the vicinity of which the external unit 20 is positioned, following a command of the internal unit 10, 10a, 10b.

As already mentioned, the camera 22 is able to recognize and acquire a two-dimensional bar code (for example a QR code) shown to it. For this purpose, the camera will be chosen with suitable resolution for a clear acquisition of the image of the code, in the expected light conditions around the external unit.

In accordance with the invention, the video door entry system 5 comprises decoding means 26 suitable for decoding said two-dimensional bar code 32.

These decoding means 26 are able to extract from the two-dimensional bar code 32 the information contained in it. Furthermore, said decoding means 26, depending on the information extracted, are suitable for performing the associated operating commands.

In accordance with the invention, the operating commands performed by the decoding means 26 may advantageously comprise commands for opening the barrier for access to the premises controlled by the video door entry system 5. Advantageously, opening of the barrier for access to the premises may therefore be performed automatically without the need for manual operation via the interface means 13 of the internal unit 10, 10a, 10b.

As shown in Figure 1, the decoding means 26 of the video door entry system 5 may advantageously be situated inside the control unit 25 of the external unit 20.

Advantageously, the external unit 20 may comprise a storage stage 28 suitable for storing the commands for performing operation according to the information extracted from the two-dimensional bar code.

The two-dimensional bar code to be shown to the camera may be created using various systems, such as a suitable application installed on a personal computer, a smart phone or equivalent systems, as may be easily imagined by the person skilled in the art.

In accordance with the invention, advantageously the control unit 15 is itself able to create a two-dimensional bar code 32 (QR code) depending on the commands entered by the user.

The internal unit 10, 10a, 10b may also comprise transmission means 16 suitable for sending to an external device 30 the two-dimensional bar code 32 created by the control unit 15.

Advantageously the transmission means 16 may comprise a transmission stage suitable for transmitting using the GSM or GPRS or WAP/WI-FI communication standard. Said transmission means 16 are therefore suitable for sending to the external device 30, by means of a multimedia telephone message or an electronic mail message, the two-dimensional bar code 32 created by the control unit 15. The external device 30 able to receive the two-dimensional bar code 32 created by the control unit 15 may be, for example, a mobile phone, a smart phone or a personal computer or any corresponding device. Advantageously the code may be shown to the camera directly from the screen of the device 30 or alternatively may also be printed so that the print-out can be shown to the camera.

The storage stage 28 may advantageously store directly the two-dimensional bar code 32 created by the control unit 25 of the internal unit 10, for a subsequent conformity check, or store the commands associated with it.

In addition or alternatively, the decoding means of the system may simply extract from the two-dimensional code the information which the control units translate into operating commands for the system, using any predefined command transfer method known per se.

All this is facilitated by the large number of characters which may be inserted in a two-dimensional code (for example, a QR standard code may comprise up to 4.296 alphanumeric characters).

In a known manner, the internal unit 10, 10a, 10b and the external unit 20 are placed in communication with each other.

Advantageously, following decoding of the two-dimensional bar code 32 performed by the decoding means 26 and according to the information extracted from the two-dimensional bar code 32, the video screen 12 of the internal unit 10, 10a, 10b may display the information contained in the two-dimensional bar code 32. The user in the vicinity of the internal unit 10, 10a, 10b (or a suitable display device connected to it, for example using also the same unit for remote transmission of the two-dimensional code) in this way may be informed about the details of the visitor who is being identified at the external unit 20.

Furthermore, following decoding of the two-dimensional bar code 32, the audio means 14 of the internal unit 10, 10a, 10b may emit an acoustic signal indicating that the two-dimensional bar code 32 has been decoded by the decoding means 26 and, if appropriate, that the access barrier has been opened.

Moreover, without any operation via the internal unit, the system may extract commands from the information contained in the two-dimensional bar code and consequently intervene, for example so as to open automatically the barrier only during particular times of the day or only on specific days, etc., or so as to set operating parameters of other systems, such as lighting or heating, etc.

Below operation of the video door entry system according to the invention will be described, assuming for the sake of simplicity that the system 5 comprises an internal unit 10 and an external unit 20. Obviously the comments below are applicable also to the case where the video door entry system 5 comprises a plurality of internal units 10 and a plurality of external units 20.

For example the owner of the premises in which the internal unit 10 of the video door entry system 5 is located may agree beforehand to meet an acquaintance at his/her home.

Alternatively, the owner could agree to allow access, for example at a given time on a given day or on given days, to a person who must carry out a certain activity inside the property (for example a gardener, cleaner, etc.).

By means of the video door entry system 5 according to the invention it is advantageously possible to program automatic opening of the barrier in the vicinity of which the external unit 20 is located. In this way the authorized visitor may access the inside more easily.

The owner of the premises, having agreed the date and time of the meeting with the visitor or, in any case, access to the inside, may then go to the internal unit 10.

Via the interface means 13 the owner may for example enter the name and surname (or a pseudonym) of the visitor concerned, following by the date and expected time of arrival and the mobile phone number and/or the email address of the visitor.

Advantageously, as mentioned, this data input operation may be performed, in a known manner, also remotely.

The control unit 15 of the internal unit 10, on the basis of the information entered by the owner of the premises, creates a two-dimensional bar code 32, with all the necessary predefined information.

Said two-dimensional bar code 32 via the transmission means 16 of the internal unit 10 is sent, for example in the form of a multimedia telephone message or electronic mail message, to one or more devices 30 associated with a mobile phone number or an email address indicated.

The visitor goes to the location at the agreed time and, upon reaching the access barrier, is able to display on his/her device 30, for example a mobile phone, the image of the two-dimensional bar code 32 received. After bringing the screen of his/her mobile phone 30 up to the camera 22, the visitor operates a suitable identification key included in the interface means 23 of the external unit 20. Alternatively, the system may be set to recognize automatically a two-dimensional code shown to the camera, without any manual intervention.

Alternatively, the visitor may decide to print on a sheet of paper the two-dimensional bar code 32 received. In this case, once in the vicinity of the external unit 20, the visitor must position the printed sheet close to the camera 22.

Once the code has been positioned close to the camera and, where necessary, after pressing the identification key, the visitor will activate an automatic identification procedure.

The camera 22 acquires the two-dimensional bar code 32 shown to it. Then the decoding means 26 of the video door entry system 5 decode the two-dimensional bar code acquired by the camera 22, extracting the information contained in it.

The decoding means 26 are therefore suitable for checking that the two-dimensional bar code has been created by the internal unit 10 of the video door entry system 5 and that the code shown has been effectively authorized at the entrance to the premises.

Moreover the decoding means 26 are also suitable for checking that the time of arrival of the visitor corresponds, within a predetermined variation range, for example more or less one hour, to the time of arrival indicated in the two-dimensional bar code 32.

Once identification has been performed, the decoding means 26 send an opening command to the operating unit 27 so that the access barrier is opened.

At the same time, said decoding means 26 may alert the owner of the premises as to the arrival of the visitor.

The video screen 12 of the internal unit 10, in fact, is designed to display the information contained in the two-dimensional bar code 32, such as the name or pseudonym of the visitor, as entered during creation of the two-dimensional bar code.

Similarly, successful identification may be signalled by an acoustic signal emitted by the audio means 14 of the internal unit 10.

The video door entry system 5 could also be set to signal to the owner of the premises also that a two-dimensional bar code 32 not generated by the internal unit 10 of the video door entry system 5 has been identified. In such a case, the decoding means 26 instead of carrying out an opening command could emit an alarm signal, signalling a possible attempt at entry by an unauthorized person.

Advantageously, in order to increase the safety of the premises monitored by the video door entry system 5 and prevent the creation of false two-dimensional bar codes 32 for attempted access by intruders, at the time of creation of the two-dimensional code 32 it is possible to include in it also a code which is random and/or unique and/or associated with a secret password.

Obviously, in the case of several independent internal units, the two-dimensional code will also include the information as to which internal unit is associated with that code, so that communication messages may be sent to this internal unit.

At this point it is clear how the predefined objects have been achieved, providing a video door entry system 5 which has a simple structure, with integrated decoding means 26 able to perform, following a secure authentication procedure, opening of the barrier controlled by the video door entry system 5.

The possibility of providing easy access to the premises controlled by the video door entry system 5 does not prejudice security. On the contrary it ensures that the owner of the premises has greater and more flexible control over access.

Furthermore, the control unit 25, which comprises a storage stage 28, allows storage of the sequence of various occasions on which the inside of the premises is accessed.

Also, the video door entry system 5 may be easily and rapidly programmed also by non-expert users.

Finally, both the structure of the external unit 20 and the structure of the internal unit 10 may be kept very compact with advantageously small dimensions.

Obviously, the above description of an embodiment applying the innovative principles of the present invention is provided by way of example of these innovative principles and must therefore not be regarded as limiting the scope of the rights claimed herein.

For example, with regard to the embodiments described above, the person skilled in the art may, in order to satisfy specific requirements, make modifications to and/or replace elements described with equivalent elements, without thereby departing from the scope of the accompanying claims.

## Claims

1. Video door entry system (5) comprising:
- at least one internal unit (10, 10a, 10b) comprising a video screen (12) and intended to be positioned inside premises;
- at least one external unit (20) intended to be positioned at an access barrier of said premises and comprising a camera (22) suitable for acquiring images of the area situated in the proximity of the at least one external unit (20) and for sending them to the video screen (12) of the internal unit (10, 10a, 10b) for display thereof, a control unit (25) and an operating unit (27) suitable for performing opening of said access barrier following a command of the internal unit (10, 10a, 10b);
**characterized in that**
said camera (22) is able to recognize and acquire a two-dimensional bar code (32) shown to it; and **in that** the video door entry system (5) comprises decoding means (25) suitable for decoding said two-dimensional bar code (32) in order to extract the information contained in it and execute operating commands according to said extracted information.

2. Video door entry system (5) according to claim 1, **characterized in that** the operating commands comprise commands for opening said access barrier.

3. Video door entry system (5) according to claim 1, **characterized in that** the decoding means (26) are situated inside said control unit (25) of the at least one external unit (20).

4. Video door entry system (5) according to claim 1, wherein said at least one internal unit (10) comprises a control unit (15) suitable for creating said two-dimensional bar code (32).

5. Video door entry system (5) according to claim 4, wherein said at least one internal unit (10) comprises transmission means (16) suitable for sending to an external device (30) the two-dimensional bar code (32) created by the control unit (15) of the at least one internal unit (10).

6. Video door entry system (5) according to any one of the preceding claims, wherein said at least one control unit (25) of the at least one external unit (20) comprises a storage stage (28) suitable for storing the two-dimensional bar code (32) created by the control unit (15) of the at least one internal unit (10).

7. Video door entry system (5) according to claim 5, wherein the transmission means (16) comprise a transmission stage suitable for transmitting using the GSM or GPRS or WAP/WI-FI communication standard, said transmission means (16) being suitable for sending by means of a multimedia phone message or an electronic mail message to an external device (30) the two-dimensional bar code (32) created by the control unit (15) of the at least one internal unit (10).

8. Video door entry system (5) according to claim 4, wherein the control unit (15) of the at least one internal unit (10) is suitable for creating a two-dimensional bar code (32) according to parameters set up by a user via interface means (13) of the internal unit (10).

9. Video door entry system (5) according to claim 8, wherein said interface means (13) are remotely programmable.

10. Video door entry system (5) according to claim 1, wherein the video screen (12) of the internal unit (10) is suitable for displaying the information contained in the two-dimensional bar code (32) decoded by the decoding means (26).
